(19) **Europäisches Patentamt**

**European Patent Office**

**Office européen des brevets**

(11) **EP 1 314 958 B1**

(12) **EUROPÄISCHE PATENTSCHRIFT**

(45) Veröffentlichungstag und Bekanntmachung des Hinweises auf die Patenterteilung:
**21.09.2005 Patentblatt 2005/38**

(51) Int Cl.⁷: **G01B 21/18**, B60C 11/24

(21) Anmeldenummer: **02020020.0**

(22) Anmeldetag: **06.09.2002**

(54) **Profiltiefe eines Reifens am fahrenden Fahrzeug mit einem Reifenabriebsverhältnis zweier Achsen**

Tyre tread depth during vehicle travel with a ratio of wear between two axles

Profondeur du profil d'un pneu pendant la course du véhicule avec une relation d'abrasion entre deux essieux

(84) Benannte Vertragsstaaten:
**DE FR GB IT**

(30) Priorität: **22.11.2001 DE 10157261**

(43) Veröffentlichungstag der Anmeldung:
**28.05.2003 Patentblatt 2003/22**

(73) Patentinhaber: **Continental Aktiengesellschaft 30165 Hannover (DE)**

(72) Erfinder:
• **Volk, Heiner**
  **31535 Neustadt (DE)**
• **Kluge, Stefan, Dr.**
  **30823 Garbsen (DE)**

(56) Entgegenhaltungen:
**EP-A- 0 890 458     DE-A- 19 514 219**

EP 1 314 958 B1

**Beschreibung**

Die Erfindung betrifft ein Verfahren und eine Vorrichtung zur Ermittlung einer Profiltiefe eines Kraftfahrzeugreifens.

Aus dem Stand der Technik sind verschiedene Verfahren zur Bestimmung der Profiltiefe bei einem Fahrzeugreifen bekannt. Aus der DE 198 31 732 A1 ist ein entsprechendes Verfahren bekannt, welches auf der Verwendung von Schlupfdaten zur Profiltiefenbestimmung unter Nutzung bekannter Reifenparameter basiert. Dabei wird die Tatsache ausgenutzt, dass sich ein unter Last abrollender Reifen, insbesondere im Stollenbereich verformt und der sich durch diese Verformung ergebende Schlupf unmittelbar von der Dicke der Stollen und damit von der Profiltiefe abhängt. Aus der Kombination der Schlupfdaten mit den spezifischen Daten der auf dem Fahrzeug montierten Reifen sowie der Fahrdynamik und weiterer Umweltdaten wird aus einem Kennfeld die Profiltiefe gewonnen.

Nachteilig ist hierbei insbesondere der für die Ermittlung des Reifenformschlupfs bei bestimmten Fahrbedingungen erforderliche Aufwand sowie auch für die Bewertung des Reifenformschlupfs in Abhängigkeit von den jeweils vorliegenden Fahrbedingungen. Ebenso ist nachteilig, dass für sämtliche für ein Fahrzeug zugelassene Reifentypen ein Kennfeld zur Ermittlung der Profiltiefe aus dem bewerteten Reifen Formschlupf durch Versuche ermittelt werden muss.

Aus der DE 32 36 520 C2 ist eine Einrichtung zum Anzeigen des Zustandes von Reifen an einem Fahrzeug bekannt, und zwar für die Überwachung der Reifen hinsichtlich eines plötzlichen Druckabfalls. Hierzu werden die Drehzahlen der Räder gemessen und mit einer Referenzgeschwindigkeit verglichen. Die Referenzgeschwindigkeit wird dabei zu bestimmten Zeitpunkten ermittelt, die einem vorgegebenen Fahrzustand entsprechen. Für die Durchführung der Überwachung werden verschiedene Komponenten eines ohnehin vorhandenen Antiblockiersystems mit verwendet. Eine Ermittlung der Profiltiefe ist mit der aus dieser Druckschrift bekannten Einrichtung nicht möglich.

Aus der DE 195 14 219 A1 ist ein Verfahren zur Ermittlung der Profiltiefe der Reifen eines Kraftfahrzeugs bekannt, welches während der Fahrt eine laufende Ermittlung der Profiltiefe ermöglicht. Ausgegangen wird dabei von einer bekannten Profiltiefe eines neuen Reifens an der Antriebsachse. Daraus wird die aktuelle Profiltiefe dieses Reifens bestimmt, in dem eine den Fahrstil des Fahrers beschreibende Fahraktivität ermittelt wird, und zwar aus den Betriebsgrößen des Fahrzeugs wie Drosselklappenstellung, Motordrehzahl, Querbeschleunigung etc. In Abhängigkeit von der Fahraktivität wird dann ein spezifischer Reifenverschleiß mit Hilfe eines entsprechenden Kennfeldes bestimmt. Unter Kenntnis der Ausgangsprofiltiefe wird aus dem spezifischen Reifenverschleiß in Abhängigkeit des Fahrstils sowie der seit der Ermittlung der Ausgangsprofiltiefe zurückgelegten Wegstrecke die aktuelle Profiltiefe bestimmt. Die Profiltiefen der Räder an der Vorderachse werden basierend auf der Profiltiefe an der Antriebsachse aus der Raddrehzahldifferenz und der Fahrgeschwindigkeit aus einem Kennfeld ermittelt.

Nachteilig ist hierbei insbesondere, dass die Ermittlung der den Fahrstil des Fahrers beschreibenden Fahraktivität aus den Betriebsgrößen des Fahrzeugs relativ aufwendig und ungenau ist. Entsprechend sind die Ergebnisse der Radprofiltiefenbestimmung unbefriedigend.

Der Erfindung liegt daher die Aufgabe zugrunde, ein verbessertes Verfahren und eine verbesserte Vorrichtung zur Ermittlung einer Profiltiefe eines Kraftfahrzeugreifens zu schaffen.

Die der Erfindung zugrunde liegende Aufgabe wird mit den unabhängigen Patentansprüchen 1, 13 jeweils gelöst. Bevorzugte Ausführungen der Erfindung sind in den abhängigen Patentansprüchen angegeben.

Die Erfindung erlaubt es, die Bestimmung der Profiltiefen der Reifen eines Kraftfahrzeugs mittels eines Reifenabriebsverhältnisses von Reifen auf der ersten Achse im Verhältnis zu Reifen auf der zweiten Achse des Kraftfahrzeuges zu ermitteln. Die Erfindung macht sich dabei die Erkenntnis zunutze, dass fahrzeugtyspezifisch ein Reifenabriebsverhältnis ermittelt werden kann, welches jeweils charakteristisch für den betreffenden Fahrzeugtyp ist.

In einer bevorzugten Ausführungsform der Erfindung wird das Reifenabriebsverhältnis eines bestimmten Fahrzeugtyps durch eine statistische Untersuchung gewonnen. Hierzu werden Testfahrten mit Fahrzeugen dieses Fahrzeugtyps durchgeführt um jeweils das Verhältnis des Reifenabriebs von Reifen der ersten Achse, beispielsweise der Hinterachse, zu den Reifen der zweiten Achse, beispielsweise der Vorderachse, festzustellen.

Die so ermittelten Reifenabriebsverhältnisse werden beispielsweise in einem Histogramm statistisch ausgewertet. Dasjenige Reifenabriebsverhältnis mit der größten absoluten Häufigkeit oder der Schwerpunkt des Histogramms wird dann als das den jeweiligen Fahrzeugtyp charakterisierende Reifenabriebsverhältnis definiert. Bei Fronttrieblern liegt das Reifenabriebsverhältnis von Reifen der Hinterachse zu Reifen der Vorderachse im Allgemeinen zwischen 0,3 bis 0,9 und bei Hecktrieblern im Allgemeinen zwischen 1,4 und 2,4, wobei bei heckgetriebenen Fahrzeugen das Reifenabriebsverhältnis im Allgemeinen mit zunehmender Motorleistung ansteigt.

Nach einer weiteren bevorzugten Ausführungsform der Erfindung wird von einer bekannten Referenzprofiltiefe eines der Reifen des Kraftfahrzeugs, welcher als Referenzreifen definiert wird, ausgegangen. Der Referenzreifen kann sich an der Vorder- oder an der Hinterachse befinden. Im Weiteren wird ohne Beschränkung der Allgemeinheit davon ausgegangen, dass sich der Referenzreifen an der Hinterachse befindet.

Für die Ermittlung der aktuellen Referenzprofiltiefe nach einer gewissen Zeitdauer wird die Abnahme der Profiltiefe eines Reifens an der Vorderachse bestimmt. Mittels der Abnahme der Profiltiefe des Reifens an der Vorderachse und dem Reifenabriebsverhältnis wird dann die Abnahme der Profiltiefe des Referenzreifens ermittelt, woraus sich die aktuelle Referenzprofiltiefe ergibt.

Nach einer weiteren bevorzugten Ausführungsform der Erfindung wird für die Ermittlung der Abnahme der Profiltiefe des Reifens an der Vorderachse davon ausgegangen, dass sich die gegebene Referenzprofiltiefe noch nicht geändert hat. Mit der gegebenen Referenzprofiltiefe als Basis wird dann beispielsweise durch Messung der Raddrehzahlverhältnisse von Rädern der Vorder- und der Hinterachse die Profiltiefe von Rädern der Vorderachse ermittelt. Hieraus wird dann wiederum die aktuelle Referenzprofiltiefe ermittelt. Dieses Vorgehen wiederholt sich iterativ während der Fahrt des Kraftfahrzeugs.

Nach einer weiteren bevorzugten Ausführungsform der Erfindung werden die Komponenten einer meist ohnehin vorhandenen Antiblockiersystem-Regelung für die Durchführung eines erfindungsgemäßen Verfahrens benutzt. Bei einem üblichen Antiblokkiersystem werden Korrekturfaktoren für die Regelung ermittelt, die sich aus dem Drehzahlverhältnis eines betrachteten Reifens zu einem Referenzreifen ergeben. Diese Korrekturfaktoren werden für die Ermittlung der Profiltiefe in einem erfindungsgemässen Verfahren herangezogen.

Nach einer weiteren bevorzugten Ausführungsform der Erfindung werden die ermittelten Profiltiefen dem Fahrer des Kraftfahrzeugs beispielsweise auf einer Anzeige im Fahrzeugcockpit dargestellt. Ferner können die ermittelten Profiltiefen mit einer vorgegebenen minimalen Profiltiefe verglichen werden, bei deren Unterschreitung für den Fahrer ein Warnsignal abgegeben wird.

Nach einer weiteren bevorzugten Ausführungsform der Erfindung wird durch Extrapolation des Reifenabriebs eine noch zu fahrende Entfernung bis die minimale Profiltiefe erreicht ist, ermittelt und dem Fahrer ebenfalls angezeigt.

Nach einer weiteren bevorzugten Ausführungsform der Erfindung werden mittels entsprechender Sensoren Umweltbedingungen des Fahrzeugs erfasst, z. B. das Vorhandensein von Straßennässe, Regen, Reifen-Schlupf sowie die Messung der Außentemperatur. Diese Umweltbedingungen werden dann mit der ermittelten Profiltiefe abgeglichen.

Wird beispielsweise das Vorhandensein von Straßennässe festgestellt und ist gleichzeitig die Profiltiefe bereits relativ gering, so kann darauf hin ein Warnsignal hinsichtlich Aquaplaning an den Fahrer abgegeben werden. Desgleichen sind die Traktionseigenschaften auf schneebedeckter Fahrbahn ganz wesentlich von der Reifenprofiltiefe abhängig. Falls die gemessene Außentemperatur sowie das Vorhandensein von Reifen-Schlupf auf Schnee auf der Fahrbahndecke hinweisen, kann dies - bei einer entsprechend geringen Profiltiefe - zur Ausgabe einer weiteren entsprechenden Warnung an den Fahrer verwendet werden.

Im weiteren werden bevorzugte Ausführungsformen der Erfindung mit Bezug auf die Zeichnungen näher erläutert. Es zeigen

Figur 1    ein Flussdiagramm einer ersten Ausführungsform der Erfindung,

Figur 2    ein Flussdiagramm einer zweiten Ausführungsform der Erfindung,

Figur 3    ein Flussdiagramm einer dritten Ausführungsform der Erfindung zur Bestimmung der noch zu fahrenden Entfernung, bis eine minimale Profiltiefe erreicht ist,

Figur 4    ein Blockdiagramm einer erfindungsgemäßen Vorrichtung in einem Kraftfahrzeug,

Figur 5    ein Histogramm für die Ermittlung eines typspezifischen Reifenabriebsverhältnisses eines ersten Fahrzeugtyps,

Figur 6    ein Histogramm für die Ermittlung eines typspezifischen Reifenabriebsverhältisses eines zweiten Fahrzeugtyps,

Figur 7    die unterschiedlichen Reifenabriebsverhältnisse verschiedener Fahrzeugtypen.

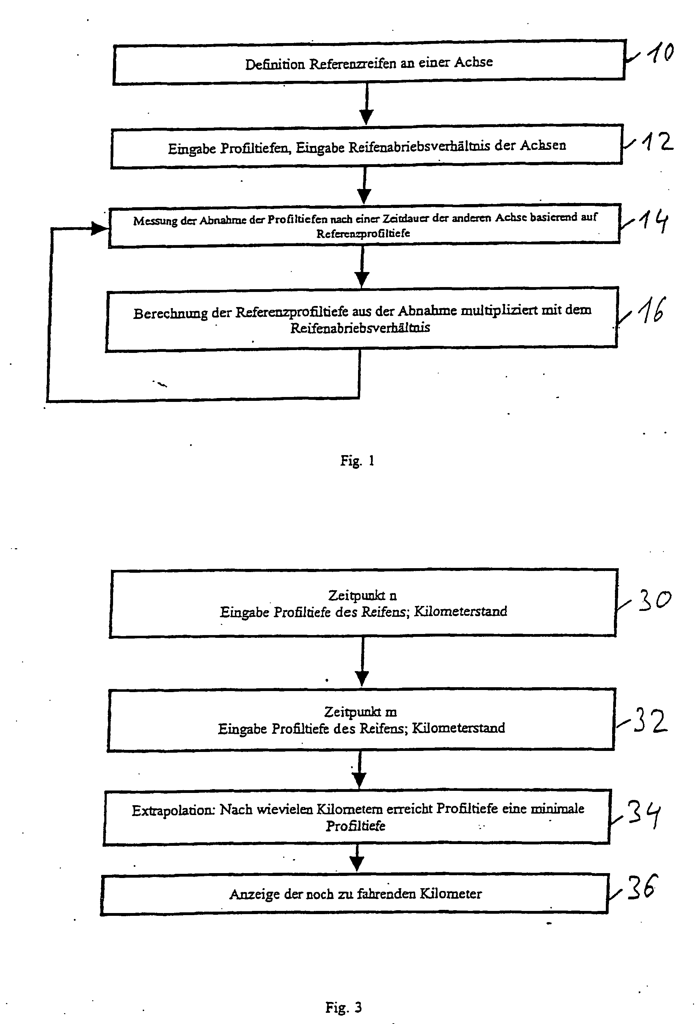

Die Figur 1 zeigt ein Flussdiagramm einer ersten Ausführungsform eines erfindungsgemäßen Verfahrens zur Bestimmung der Profiltiefe. In dem Schritt 10 wird zunächst ein Referenzreifen auf einer Achse des Kraftfahrzeugs definiert. Als Referenzreifen kann grundsätzlich jeder beliebige Reifen des Kraftfahrzeugs gewählt werden. Ohne Beschränkung der Allgemeinheit wird im Weiteren davon ausgegangen, dass ein Reifen auf der Hinterachse des Fahrzeugs als Referenzreifen gewählt wird.

In dem Schritt 12 wird zumindest die Profiltiefe des Referenzreifens eingegeben. Dies erfolgt vorzugsweise dann, wenn das Fahrzeug neu bereift wird. Die Profiltiefe des neuen Reifens lässt sich dann beispielsweise einer entsprechenden Herstellerangabe entnehmen. Die Profiltiefe kann bereits auch werksseitig eingegeben werden.

Ferner wird in dem Schritt 12 das Reifenabriebsverhältnis von Reifen auf der Hinterachse zu Reifen auf der Vorderachse des Fahrzeuges eingegeben. Hierbei handelt es sich um einen fahrzeugtypspezifischen Parameter, der z. B. experimentell ermittelt werden kann. Auch das Reifenabriebsverhältnis kann bereits werksseitig einprogrammiert werden, da es sich um eine fahrzeugtypspezifische Konstante handelt.

In dem Schritt 14 wird die Abnahme der Profiltiefen von Reifen auf der Vorderachse nach einer gewissen Zeitdauer ermittelt. Hierfür kann die in dem Schritt 12 eingegebene Referenzprofiltiefe verwendet werden. Diese wird als nach der Zeitdauer im Wesentlichen unverändert angesehen.

Beispielsweise durch die Ermittlung der Drehfrequenzverhältnisse eines Reifens auf der Vorderachse zu dem Referenzreifen ergibt sich aus der Referenzprofiltiefe die aktuelle Profiltiefe des betrachteten Reifens auf der Vorderachse. Eine solche Messung wird zu Beginn und zum Ende der Zeitdauer durchgeführt, um die Abnahme der Profiltiefe eines Reifens auf der Vorderachse näherungsweise zu bestimmen. Bei dieser Bestimmung kann auch die Fahrgeschwindigkeit mit eingehen, wie an sich aus der DE 195 14 219 A1 bekannt ist.

In dem Schritt 16 wird die aktuelle Referenzprofiltiefe aus der Abnahme der Profiltiefe des betrachteten Rads an der Vorderachse bestimmt, indem die gegebene Referenzprofiltiefe um das Produkt aus der Abnahme und dem Reifenabriebsverhältnis vermindert wird. Im Weiteren wird dieser Vorgang iterativ wiederholt, indem in einem nachfolgenden Schritt 14 erneut die Abnahme der Profiltiefe eines Rads an der Vorderachse bestimmt wird, und zwar wiederum basierend auf der Referenzprofiltiefe. Als Referenzprofiltiefe in dem Schritt 14 wird die in dem vorherigen Schritt 16 bestimmte aktuelle Referenzprofiltiefe verwendet, die wiederum als über die Zeitdauer des Schritts 14 annäherungsweise konstant fingiert wird.

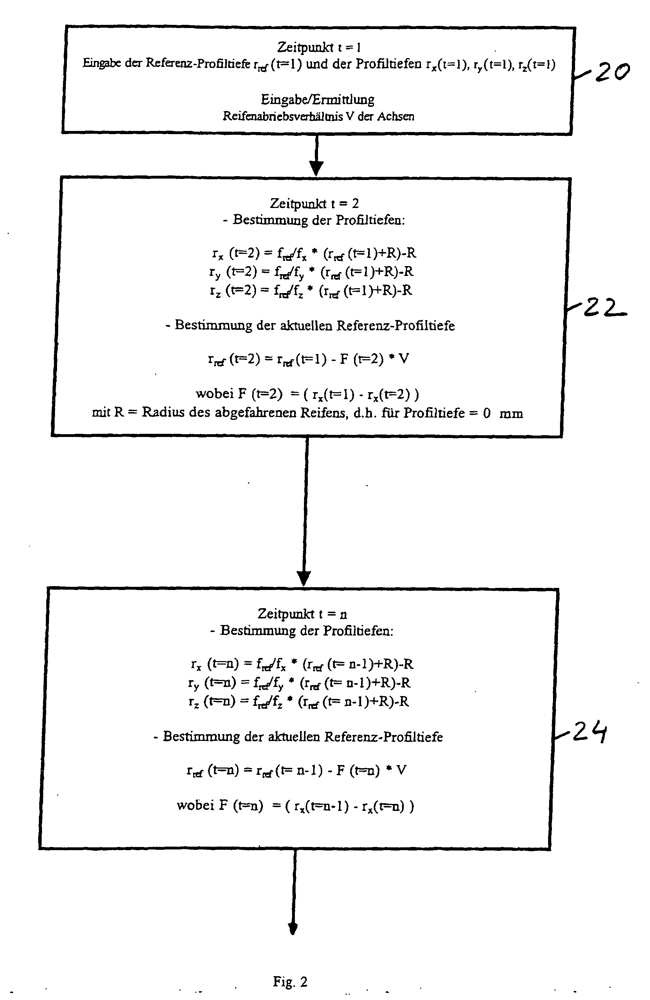

Die Figur 2 zeigt eine weitere bevorzugte Ausführungsform des erfindungsgemäßen Verfahrens. In dem Schritt 20 wird zu einem Zeitpunkt t=1 zumindest eine Referenz-Profiltiefe $r_{ref}$ (t=1) des definierten Referenzreifens der Hinterachse eingegeben. Zusätzlich können auch die weiteren Profiltiefen der Reifen des Kraftfahrzeugs, wenn diese eine von der Referenz-Profiltiefe $r_{ref}$ abweichende Profiltiefe haben, eingegeben werden, wobei dies jedoch nicht unbedingt erforderlich ist.

Hierbei handelt es sich um die Profiltiefen $r_x$ (t=1), $r_y$ (t=1) und $r_z$ (t=1), wobei es sich bei der Profiltiefe $r_x$ um die Profiltiefe beispielsweise des linken Vorderreifens, bei $r_y$ um die Profiltiefe des rechten Vorderreifens und bei $r_z$ um die Profiltiefe des rechten Hinterreifens handelt, wenn als Referenzreifen der linke Hinterreifen definiert ist.

Ferner wird in dem Schritt 20 das Reifenabriebsverhältnis V der Achsen, d. h. das Verhältnis des Reifenabriebs von Reifen der Hinterachse zu dem Reifenabrieb von Reifen der Vorderachse des Fahrzeugs, eingegeben. Das Reifenabriebsverhältnis V ist typspezifisch und kann beispielsweise durch eine statistische Untersuchung ermittelt werden.

In dem Schritt 22 werden dann zu einem Zeitpunkt t=2 die aktuellen Profiltiefen der Räder des Fahrzeugs bestimmt. Zwischen den Zeitpunkten t=1 und t=2 ist dabei eine gewisse Zeitdauer vergangen, innerhalb derer das Fahrzeug in Betrieb war.

Die Bestimmung der Profiltiefen $r_x$, $r_y$ und $r_z$ zu dem Zeitpunkt t=2 erfolgt basierend auf der Referenzprofiltiefe $r_{ref}$ des Zeitpunkt t=1. Hierzu wird die Drehfrequenz $f_{ref}$ des Referenzreifens während der Fahrt bestimmt sowie auch die Drehfrequenz des betreffenden Reifens, dessen Profiltiefe zu bestimmen ist, d. h. beispielsweise die Drehfrequenz $f_x$ des linken Vorderreifens.

Wenn ein ABS-System vorhanden ist, kann der Quotient $f_{ref} / f_x$ auch aus der Korrektur der ABS-Regelung ermittelt werden. Diese Korrektur ist beispielsweise für den linken Vorderreifen definiert als $k_x = f_x / f_{ref}$. In diesem Fall kann also auf die von dem ABS-System ermittelten Werte zurückgegriffen werden.

Die aktuellen Profiltiefen zum Zeitpunkt t=2 ergeben sich dann durch Multiplikation der entsprechenden Drehfrequenzquotienten bzw. mit dem Kehrwert aus der ABS-Korrektur $k_x$ mit der Referenz-Profiltiefe $r_{ref}$ zum Zeitpunkt t=1. Hierbei wird davon ausgegangen, dass die Referenz-Profiltiefe $r_{ref}$ in dem Zeitraum zwischen dem Zeitpunkt t=1 und dem Zeitpunkt t=2 im Wesentlichen konstant geblieben ist.

Die für die Berechnung der einzelnen Profiltiefen $r_x$, $r_y$ und $r_z$ erforderlichen Berechnungen sind untenstehend angegeben:

$$r_x (t=2) = f_{ref} / f_x * r_{ref} (t=1)$$

$$r_y (t=2) = f_{ref} / f_y * r_{ref} (t=1)$$

$$r_z (t=2) = f_{ref} / f_z * r_{ref} (t=1)$$

Danach erfolgt die Bestimmung der aktuellen Referenz-Profiltiefe $r_{ref}$ (t=2). Hierzu wird zunächst ein Faktor F zum Zeitpunkt t=2 berechnet. Dieser ist die Abnahme der Profiltiefe eines Rads einer anderen Achse als des Rads des Referenzrads, also z. B. des linken Vorderrads, zwischen den Zeitpunkten t=1 und t=2. Der Faktor F ist also gleichbedeutend mit dem Reifenabrieb in dem betrachteten Zeitraum zwischen t=1 und t=2 eines Rads der Vorderachse, in dem betrachteten Beispiel des linken Vorderrads. Der Faktor F ergibt sich also wie folgt:

$$F (t=2) = (r_x(t=1) - r_x(t=2))$$

Alternativ kann zur Berechnung des Faktors F auch der Reifenabrieb des rechten Vorderrads verwendet werden. Ferner ist es auch möglich, dass der Reifenabrieb an beiden Vorderrädern etwa durch arithmische Mittlung zur Bestimmung des Faktors F verwendet wird.

Der Faktor F (t=2) wird dann mit dem Reifenabriebsverhältnis V multipliziert. Das sich hieraus ergebende Produkt wird von der Referenz-Profiltiefe $r_{ref}$ des vorhergehenden Zeitpunkts t=1 subtrahiert, um so zu der aktuellen Referenz-Profiltiefe $r_{ref}$ (t=2) zu kommen:

$$r_{ref} (t=2) = r_{ref}(t=1) - F (t=2) * V$$

In darauffolgenden Zeitpunkten t=n wird dieses Verfahren zur Bestimmung der Profiltiefen wiederholt angewendet. Für den Zeitpunkt t=n erfolgt die Berechnung wie folgt:

$$r_x (t=n) = f_{ref} / f_x * r_{ref} (t=n-1)$$

$$r_y (t=n) = f_{ref} / f_y * r_{ref} (t=n-1)$$

$$r_z (t=n) = f_{ref} / f_z * r_{ref} (t=n-1)$$

Und die Bestimmung der aktuellen Referenz-Profiltiefe $r_{ref}$ (t=n) erfolgt mittels:

$$r_{ref} (t=n) = r_{ref} (t=n-1) - F (t=n) * V$$

wobei $F (t=n) = ( r_x(t=n-1) - r_x(t=n))$

Für die Berechnung der aktuellen Profiltiefen der Räder wird also immer auf die Referenz-Profiltiefe eines vorhergehenden Zeitpunkts t=n-1 zurückgegriffen. Daraufhin erfolgt mit dem so ermittelten Reifenabrieb in der Zeitdauer zwischen t=n-1 und t=n die Bestimmung der aktuellen Referenz-Profiltiefe durch Bildung des Produkts aus dem Abrieb und dem Reifenabriebsverhältnis.

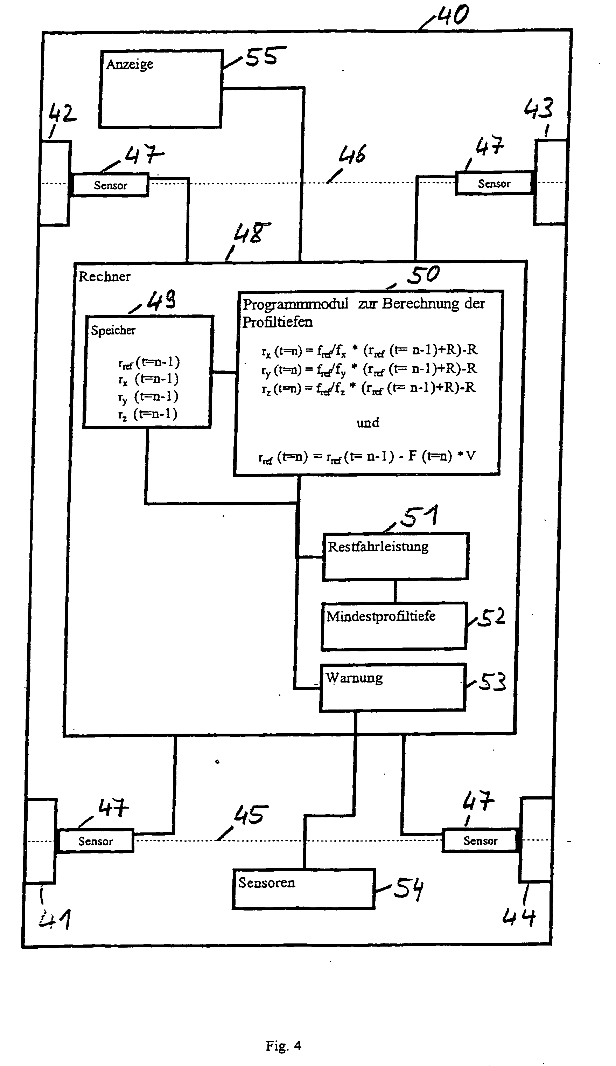

Die Figur 3 zeigt eine weitere bevorzugte Ausführungsform der Erfindung, die es erlaubt, die noch verbleibende Lebensdauer eines Reifens zu prognostizieren.

In dem Schritt 30 wird zu einem Zeitpunkt t=n die Profiltiefe eines Reifens eingegeben. Die Profiltiefe kann beispielsweise mittels eines Verfahrens gemäß Figur 1 oder Figur 2 bestimmt worden sein. Ebenso wird zu dem Zeitpunkt t=n der aktuelle Kilometerstand eingegeben. Dies wiederholt sich in dem Schritt 32 zu einem späteren Zeitpunkt t=m.

In dem Schritt 34 wird die Abnahme der Profiltiefe des Reifens in dem Zeitraum zwischen t=n und t=m in ein Verhältnis zu der in diesem Zeitraum zurückgelegten Strecke gesetzt. Durch Extrapolation wird dann die Strecke ermittelt, nach der durch weiteren Reifenabrieb eine minimale Profiltiefe erreicht worden ist. Diese noch verbleibende Strecke wird in dem Schritt 36 auf einer Anzeige für den Fahrer angezeigt. Dies hat insbesondere den Vorteil, dass der Fahrer den Reifenwechsel ausreichend vor dem Erreichen der minimalen Profiltiefe planen kann.

Die Figur 4 zeigt ein Fahrzeug 40 mit einem linken Hinterreifen 41, einem linken Vorderreifen 42, einem rechten Vorderreifen 43 und einem rechten Hinterreifen 44. Der linke Hinterreifen 41 ist als Referenzreifen mit einer Referenzprofiltiefe $r_{ref}$ definiert, der linke Vorderreifen 42 hat die Profiltiefe $r_x$, der rechte Vorderreifen 43 hat die Profiltiefe $r_y$ und der rechte Hinterreifen 44 hat die Profiltiefe $r_z$.

Der linke Hinterreifen 41 und der rechte Hinterreifen 44 befinden sich auf einer Hinterachse 45 und der linke Vorderreifen 42 und der rechte Vorderreifen 43 befinden sich auf einer Vorderachse 46 des Fahrzeugs 40. An jedem Rad des Fahrzeugs 40 befindet sich ein Sensor 47 zur Ermittlung der Drehfrequenz des betreffenden Rads. Solche Sensoren 47 sind an sich zur Verwendung in Antiblockiersystemen bekannt.

Die Sensoren 47 speisen Ihre entsprechenden Drehfrequenzsignale in einen Rechner 48 ein. Der Rechner 48 kann Teil der Steuerung des Antiblockiersystems des Fahrzeugs 40 sein.

Der Rechner 48 hat einen Speicher 49. Der Speicher 49 dient zur Speicherung der Profiltiefen eines vorhergegangenen Zeitpunkts t=n-1. Ebenso kann der Speicher 49 zur Speicherung des Reifenabriebsverhältnisses V dienen.

Der Rechner 48 hat ferner ein Programm-Modul 50. Das Programm-Modul 50 dient zur Berechnung der Reifenprofiltiefen. Hierzu kann das Programm-Modul 50 auf den Speicher 49 zugreifen, um die hierzu erforderlichen Berechnungen durchzuführen. Die entsprechenden Berechnungen wurden oben mit Bezug auf die Figur 2 im Detail erläutert. Die mittels des Programm-Moduls 50 aktuell ermittelten Profiltiefen werden nach jeder Berechnung in dem Speicher 49 hinterlegt, um hierauf für eine nachfolgende Aktualisierung zugreifen zu können.

Die entsprechenden Werte der Profiltiefen, werden von einem Programm-Modul 51 ausgewertet. Dies ist mit einem Speicher 52 verknüpft. In dem Speicher 52 ist eine Mindestprofiltiefe für den sicheren Betrieb des Fahrzeugs 40 gespeichert. Das Programm-Modul 51 berechnet aus der Abnahme der Profiltiefe eines Reifens in Abhängigkeit von der Fahrleistung durch Extrapolation die verbleibende Restlaufzeit.

Ferner ist ein Programm-Modul 53 vorhanden, welches die von dem Programm-Modul 50 ermittelten Profiltiefen mit der Mindestprofiltiefe in dem Speicher 52 vergleicht und bei einer Unterschreitung ein Warnsignal generiert. Ferner kann das Programm-Modul 53 auch zur Eingabe weiterer Signale von Sensoren 54 ausgebildet sein.

Die Sensoren können beispielsweise zur Überwachung der Straßenverhältnisse beispielsweise hinsichtlich Regennässe oder Schnee dienen. Das Programm-Modul 53 kann dann die Mindestprofiltiefe an die jeweilige Umweltsituation anpassen, d. h. eine bei trockener Fahrbahn noch sichere Mindestprofiltiefe kann z. B. bei regennasser Fahrbahn zu einer eingeschränkten Sicherheit führen. Ebenso kann für die Warnung des Fahrers bei Schneeglätte und anderen Fahrsituationen vorgegangen werden.

Die von dem Rechner 48 ermittelten Profiltiefen, die Restlaufzeit sowie gegebenenfalls von dem Programm-Modul 53 generierte Warnungen, werden auf der Anzeige 55 für den Fahrer des Fahrzeugs 40 ausgegeben.

Von besonderem Vorteil bei der Ausführungsform der Figur 4 ist, dass ein zumeist ohnehin vorhandenes Antiblockiersystem für die Realisierung der erfindungsgemäßen Vorrichtung mit verwendet werden kann. Ein solches Antiblockiersystem weist ohnehin Sensoren zur Ermittlung der Drehfrequenzen der Räder sowie einen Rechner für die Durchführung der Regelung auf. Ein solcher ABS-Rechner kann für die zuvor beschriebenen Zwecke programmtechnisch erweitert werden, so dass nur ein minimaler Aufwand für die Umsetzung der vorliegenden Erfindung erforderlich ist.

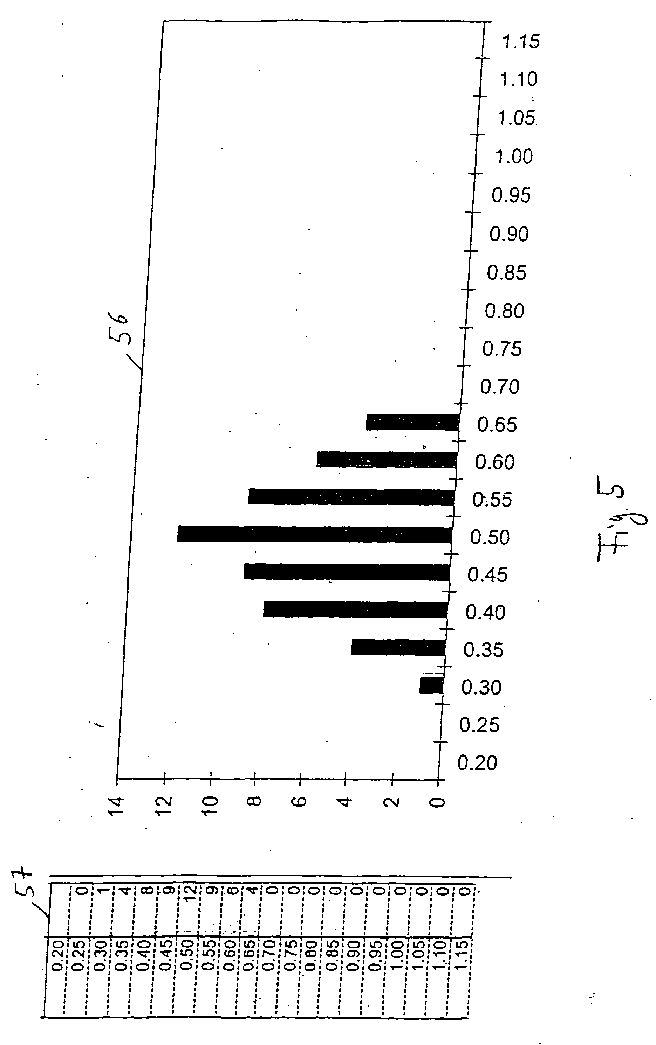

Die Figur 5 zeigt ein Histogramm 56. Die X-Achse des Histogramms 56 zeigt die für einen bestimmten Fahrzeugtyp gemessenen Reifenabriebsverhältnisse und die Y-Achse zeigt die absolute Häufigkeit für die verschiedenen Reifenabriebsverhältnisse. Die Tabelle 57 zeigt die entsprechenden Daten: Die linke Spalte der Tabelle 57 zeigt die gemessenen Reifenabriebsverhältnisse und die rechte Spalte die Anzahl von Fahrzeugen desselben Typs, bei denen ein solches Reifenabriebsverhältnis festgestellt wurde.

Das Histogramm 56 hat ein ausgeprägtes Maximum bei dem Wert 0,5 für das Reifenabriebsverhältnis zwischen Reifen der Hinterachse und der Vorderachse. Dieses wird als das typspezifisch konstante Reifenabriebsverhältnis definiert. Alternativ kann auch z. B. der Schwerpunkt des Histogramms 56 als das typspezifische Reifenabriebsverhältnis angesehen werden.

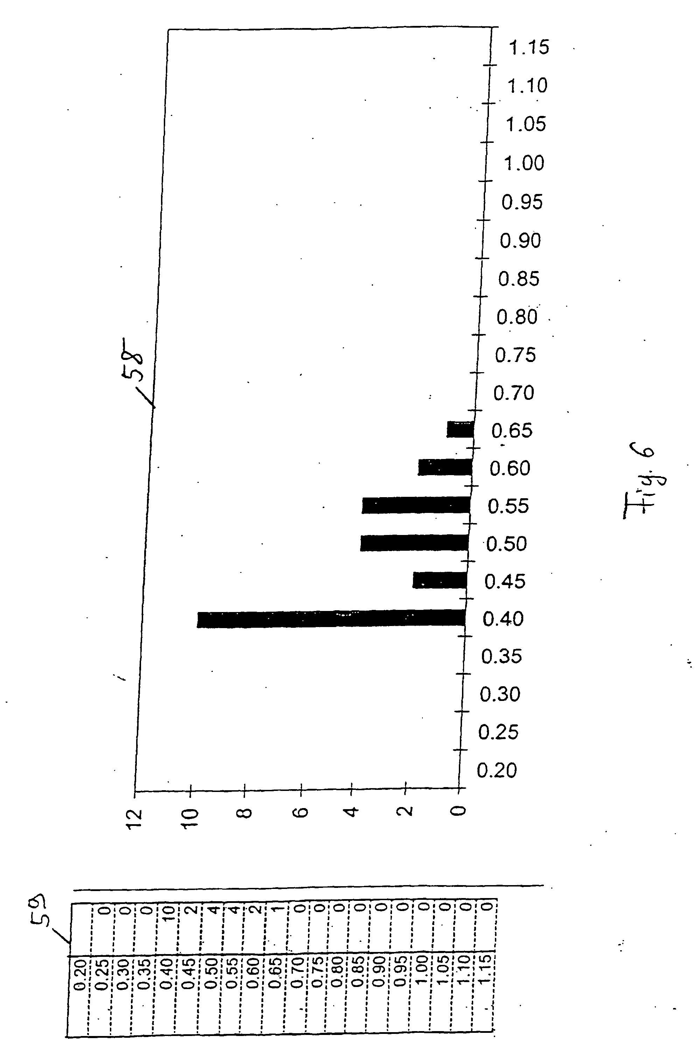

Die Figur 6 zeigt eine der Figur 5 entsprechende Darstellung für einen anderen Fahrzeugtyp. In dem entsprechenden Histogramm 58 ist ein ausgeprägtes Maximum bei dem Reifenabriebsverhältnis 0,4 vorhanden. Dieses wird als das typspezifische Reifenabriebsverhältnis angesehen. Die entsprechenden statistisch ermittelten Werte, die dem Histogramm 58 zugrunde liegen, zeigt die Tabelle 59.

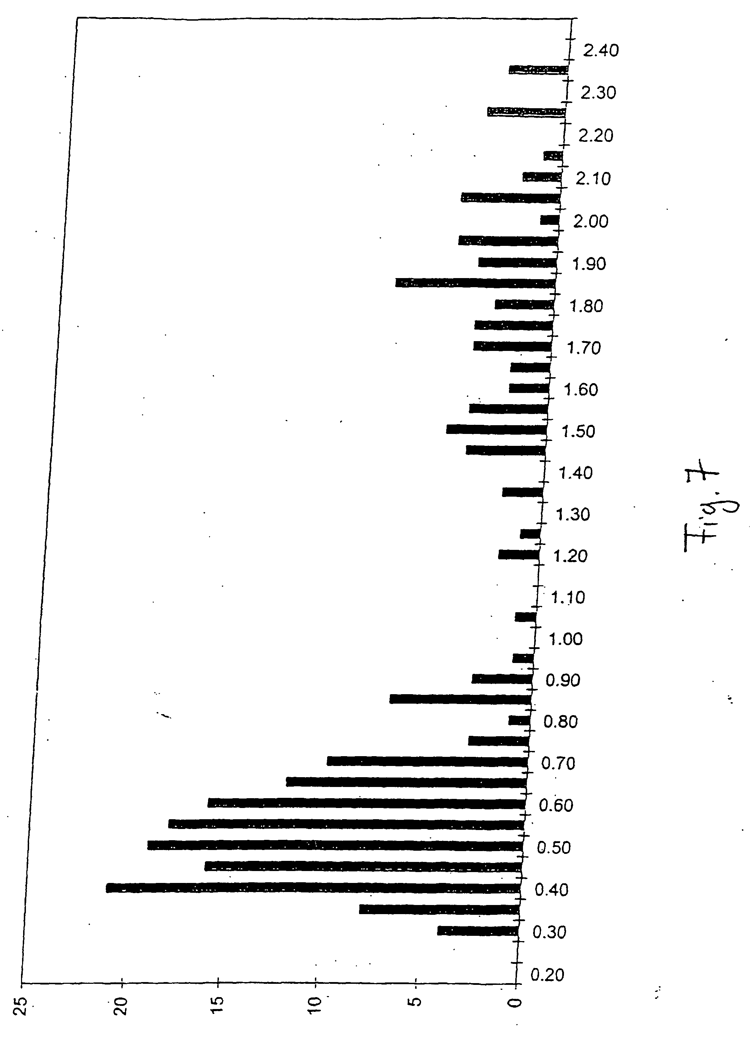

Die Figur 7 zeigt die für verschiedene Fahrzeugtypen ermittelten typspezifischen Reifenabriebsverhältnisse. Bei Fahrzeugen mit Frontantrieb ist das Reifenabriebsverhältnis im Allgemeinen in einem Bereich zwischen 0,3 und 0,8 während es bei Fahrzeugen mit Heckantrieb deutlich über 1 liegt, wobei das Reifenabriebsverhältnis mit zunehmender Motorleistung im Allgemeinen steigt.

Durch die Spreizung der tatsächlichen Reifenabriebsverhältnisse bei einem bestimmten Fahrzeugtyp entsteht ein gewisser Fehler bei der Profiltiefenberechnung, der jedoch nicht mehr als 0,5 mm Reifenprofiltiefe beträgt, wie statistische Untersuchungen ergeben haben. Dieser Messfehler kann noch weiter verkleinert werden, wenn z. B. über das Antiblockiersystem Daten betreffend die Fahrweise gesammelt werden. Aufgrund der hinsichtlich der Fahrweise gewonnenen Daten kann dann das typspezifische Reifenabriebsverhältnis entsprechend der Fahrweise angepasst werden.

## Patentansprüche

1. Verfahren zur Ermittlung einer aktuellen Referenzprofiltiefe eines Referenzreifens an einer ersten Achse eines Kraftfahrzeugs basierend auf einer zu Beginn einer Zeitdauer gegebenen Referenzprofiltiefe mit folgenden Schritten:

   - Ermittlung einer Abnahme einer Profiltiefe eines Reifens an einer zweiten Achse des Kraftfahrzeugs nach einer Zeitdauer mittels der zu Beginn der Zeitdauer gegebenen Referenzprofiltiefe,

   - Ermittlung der aktuellen Referenzprofiltiefe aus der Abnahme und aus einem Reifenabriebsverhältnis von Reifen der ersten Achse und der zweiten Achse.

2. Verfahren nach Anspruch 1 mit folgenden weiteren Schritten:

   - Messung einer Referenzdrehfrequenz des Referenzreifens,

   - Messung einer Drehfrequenz des Reifens an der zweiten Achse,

   - Bildung eines Quotienten aus der Referenzdrehfrequenz und der Drehfrequenz,

   - Multiplikation des Quotienten mit der Referenzprofiltiefe zur Ermittlung der Profiltiefe des Reifens.

3. Verfahren nach Anspruch 2, bei dem die Ermittlung der Profiltiefe des Reifens zu Beginn und zum Ende der Zeitdauer für die Ermittlung der Abnahme erfolgt, wobei vorzugsweise für die Multiplikation des Quotienten die gegebene Referenzprofiltiefe verwendet wird.

4. Verfahren nach einem der vorhergehenden Ansprüche 1, 2 oder 3, bei dem die ermittelte aktuelle Referenzprofiltiefe als gegebene Referenzprofiltiefe für eine nachfolgende Ermittlung einer weiteren aktuellen Referenzprofiltiefe verwendet wird.

5. Verfahren nach einem der vorhergehenden Ansprüche 1 bis 4, bei dem die aktuelle Referenzprofiltiefe durch Subtraktion des Produkts aus der Abnahme und des Reifenabriebsverhältnisses von der gegebenen Referenzprofiltiefe erfolgt.

**6.** Verfahren nach einem der vorhergehenden Ansprüche 1 bis 5, bei dem

- zu einem n-1 ten Zeitpunkt die gegebene Referenzprofiltiefe zur Berechnung der Profiltiefen von einem oder mehreren Reifen des Kraftfahrzeugs verwendet wird und die aktuelle Referenzprofiltiefe aus der gegebenen Referenzprofiltiefe unter Berücksichtigung der Abnahme der Profiltiefe eines Reifens an der zweiten Achse und dem Reifenabriebsverhältnis berechnet wird, und

- zu einem n-ten Zeitpunkt die aktuelle Referenzprofiltiefe des n1 ten Zeitpunkt als gegebene Referenzprofiltiefe für die Berechnung der Profiltiefen von einem oder mehreren Reifen des Kraftfahrzeugs verwendet wird.

**7.** Verfahren nach einem der vorhergehenden Ansprüche 1 bis 6, wobei die Referenzprofiltiefe und / oder die Profiltiefen von einem oder mehreren weiteren Reifen des Kraftfahrzeugs für einen Fahrer des Kraftfahrzeugs angezeigt werden.

**8.** Verfahren nach einem der vorhergehenden Ansprüche 1 bis 7, bei dem ein Vergleich mit einer minimalen Profiltiefe vorgenommen wird und ein visuelles, akustisches und / oder taktiles Warnsignal abgegeben wird, wenn eine ermittelte Profiltiefe die minimale Profiltiefe unterschreitet.

**9.** Verfahren nach einem der vorhergehenden Ansprüche 1 bis 8 mit folgenden weiteren Schritten:

- Ermittlung der Abnahme einer Profiltiefe eines Reifens zwischen einem ersten Zeitpunkt (m) und einem zweiten Zeitpunkt (n),

- Ermittlung einer zwischen dem ersten und dem zweiten Zeitpunkt zurückgelegten Entfernung,

- Ermittlung einer noch zu fahrenden Entfernung durch Extrapolation der Abnahme der Profiltiefe bis aufei auf eine minimale Profiltiefe,

- vorzugsweise visuelle Anzeige der verbleibenden zu fahrenden Entfernung.

**10.** Verfahren nach einem der vorhergehenden Ansprüche 1 bis 9 mit folgenden weiteren Schritten:

- Ermittlung von Daten hinsichtlich einer Umweltbedingung, vorzugsweise hinsichtlich des Vorhandenseins von Straßennässe, Regen, Reifen-Schlupf und / oder der Außentemperatur,
- Auswertung der Daten hinsichtlich der Umweltbedingung basierend auf einer ermittelten Profiltiefe im Hinblick auf die Bewertung der Fahrsituation, vorzugsweise hinsichtlich Aquaplaning und / oder Schneetraktion.

**11.** Verfahren nach einem der vorhergehenden Ansprüche 1 bis 10, wobei als Reifenabriebsverhältnis ein vom Typ des Kraftfahrzeugs abhängiger Parameter verwendet wird.

**12.** Verfahren nach Anspruch 11, wobei der Parameter statistisch durch die Erfassung von Reifenabriebsverhältnissen einer statischen Menge von Kraftfahrzeugen desselben Typs ermittelt wird, z. B. als Maximum oder als Schwerpunkt eines entsprechenden Histogramms.

**13.** Vorrichtung eingerichtet zur Ermittlung einer aktuellen Referenzprofiltiefe eines Referenzreifens (41) an einer ersten Achse (45) eines Kraftfahrzeugs (40) basierend auf einen zu Beginn einer Zeitdauer in einem Speicher gespeicherten Referenzprofiltiefe ($r_{ref}$) mit:

- Mitteln (49, 50) eingerichtet zur Ermittlung einer Abnahme einer Profiltiefe eines Reifens (42, 43) an einer zweiten Achse (46) des Kraftfahrzeugs nach der Zeitdauer mittels der zu Beginn der Zeitdauer Referenzprofiltiefe,

- Mitteln (49, 50) eingerichtet zur Ermittlung der aktuellen Referenzprofiltiefe basierend auf der Abnahme und einem Reifenabriebsverhältnis von Reifen der ersten und der zweiten Achse.

**14.** Vorrichtung nach Anspruch 13 mit

- Mitteln (47) zur Messung einer Referenzdrehfrequenz des Referenzreifens,

- Mitteln (47) zur Messung einer Drehfrequenz des Reifens an der zweiten Achse,

- Mitteln (50) zur Bildung eines Quotienten aus der Referenzdrehfrequenz und der Drehfrequenz,

- Mitteln (50) zur Multiplikation des Quotienten mit der Referenzprofiltiefe zur Ermittlung der Profiltiefe des Reifens.

**15.** Vorrichtung nach Anspruch 13 oder 14 mit einem Antiblockiersystem mit Mitteln zur Ermittlung einer Korrektur für die Antiblockiersystem-Regelung, wobei sich die Korrektur aus dem Quotienten der Drehfrequenz des Reifens an der zweiten Achse und der Referenzdrehfrequenz ergibt.

**16.** Vorrichtung nach Anspruch 14 oder 15, bei der die Mittel zur Ermittlung der Profiltiefe des Reifens zur Ermittlung der Profiltiefe zu Beginn und zum Ende der Zeitdauer für die Ermittlung der Abnahme ausgebildet sind, wobei vorzugsweise für die Multiplikation des Quotienten die gegebene Referenzprofiltiefe verwendet wird.

17. Vorrichtung nach einem der vorhergehenden Ansprüche 13 bis 16, mit einem Speicher für die Speicherung der für einen vorhergehenden Zeitpunkt bestimmten Profiltiefen.

18. Vorrichtung nach Anspruch 17 mit einem Programm-Modul (50) zur Berechnung der Profiltiefen zu einem aktuellen Zeitpunkt, welches für die Berechnung der Profiltiefen auf den Speicher zugreift.

19. Vorrichtung nach einem der vorhergehenden Ansprüche 13 bis 18 mit Mitteln (55) zur Anzeige der Referenzprofiltiefe und / oder der Profiltiefen von einem oder mehreren weiteren Reifen des Kraftfahrzeugs für einen Fahrer des Kraftfahrzeugs.

20. Vorrichtung nach einem der vorhergehenden Ansprüche 13 bis 19 mit Mitteln (53) zum Vergleich einer ermittelten Profiltiefe mit einer minimalen Profiltiefe, wobei die Mittel zum Vergleich zur Abgabe eines visuellen akustischen und / oder taktilen Warnsignals ausgebildet sind, wenn eine ermittelte Profiltiefe die minimale Profiltiefe unterschreitet.

21. Vorrichtung nach einem der vorhergehenden Ansprüche 13 bis 20 mit

   - Mitteln (51) zur Ermittlung der Abnahme einer Profiltiefe eines Reifens zwischen einem ersten Zeitpunkt (m) und einem zweiten Zeitpunkt (n),

   - Mitteln (51) zur Ermittlung einer zwischen dem ersten und dem zweiten Zeitpunkt zurückgelegten Entfernung,

   - Mitteln (51, 52) zur Ermittlung einer noch zu fahrenden Entfernung durch Extrapolation der Abnahme der Profiltiefe bis auf eine minimale Profiltiefe.

22. Vorrichtung nach einem der vorhergehenden Ansprüche 13 bis 21 mit

   - Mitteln (54) zur Ermittlung von Daten hinsichtlich einer Umweltbedingung, vorzugsweise hinsichtlich des Vorhandenseins von Straßennässe, Regen, Reifen-Schlupf und / oder zur Messung der Außentemperatur,

   - Mitteln (53) zur Auswertung der Daten hinsichtlich der Umweltbedingung und einer ermittelten Profiltiefe im Hinblick auf die Bewertung einer Fahrsituation, vorzugsweise hinsichtlich Aquaplaning und / oder Schneetraktion.

**Claims**

1. Method for determining a current reference tread depth of a reference tyre on a first axle of a motor vehicle on the basis of a reference tread depth given at the beginning of a time period, with the following steps:

   - determination of a decrease in a tread depth of a tyre on a second axle of the motor vehicle after a time period by means of the reference tread depth given at the beginning of the time period,

   - determination of the current reference tread depth from the decrease and a tyre wear ratio of tyres of the first axle and of the second axle.

2. Method according to Claim 1, with the following further steps:

   - measurement of a reference rotational frequency of the reference tyre,

   - measurement of a rotational frequency of the tyre on the second axle,

   - formation of a quotient from the reference rotational frequency and the rotational frequency,

   - multiplication of the quotient by the reference tread depth to determine the tread depth of the tyre.

3. Method according to Claim 2, in which the determination of the tread depth of the tyre takes place at the beginning and the end of the time period for the determination of the decrease, the given reference tread depth preferably being used for the multiplication of the quotient.

4. Method according to one of the preceding Claims 1, 2 or 3, in which the determined current reference tread depth is used as the given reference tread depth for a subsequent determination of a further current reference tread depth.

5. Method according to one of the preceding Claims 1 to 4, in which the current reference tread depth is obtained by subtraction of the product of the decrease and the tyre wear ratio from the given reference tread depth.

**6.** Method according to one of the preceding Claims 1 to 5, in which

- at an n-1th point in time, the given reference tread depth is used for the calculation of the tread depths of one or more tyres of the motor vehicle and the current reference tread depth is calculated from the given reference tread depth with allowance for the decrease of the tread depth of a tyre on the second axle and the tyre wear ratio, and

- at an nth point in time, the current reference tread depth of the n-1th point in time is used as the given reference tread depth for the calculation of the tread depths of one or more tyres of the motor vehicle.

**7.** Method according to one of the preceding Claims 1 to 6, the reference tread depth and/or the tread depths of one or more further tyres of the motor vehicle being indicated for a driver of the motor vehicle.

**8.** Method according to one of the preceding Claims 1 to 7, in which a comparison is made with a minimum tread depth and a visual, acoustic and/or tactile warning signal is emitted if a determined tread depth goes below the minimum tread depth.

**9.** Method according to one of the preceding Claims 1 to 8, with the following further steps:

- determination of the decrease in a tread depth of a tyre between a first point in time (m) and a second point in time (n),

- determination of a distance covered between the first point in time and the second point in time,

- determination of a distance still to be travelled by extrapolation of the decrease in the tread depth to a minimum tread depth,

- preferably visual indication of the remaining distance to be travelled.

**10.** Method according to one of the preceding Claims 1 to 9, with the following further steps:

- determination of data regarding an environmental condition, preferably regarding the presence of wetness on the road, rain, tyre slip and/or the outside temperature,

- evaluation of the data regarding the environmental condition on the basis of a determined tread depth with regard to the assessment of the driving situation, preferably regarding aquaplaning and/or traction on snow.

**11.** Method according to one of the preceding Claims 1 to 10, a parameter dependent on the type of motor vehicle being used as the tyre wear ratio.

**12.** Method according to Claim 11, the parameter being determined randomly by recording tyre wear ratios of a random number of motor vehicles of the same type, for example as a maximum or centroid of a corresponding histogram.

**13.** Device set up for determining a current reference tread depth of a reference tyre (41) on a first axle (45) of a motor vehicle (40) on the basis of a reference tread depth ($r_{ref}$) stored in a memory at the beginning of a time period, with:

- means (49, 50) set up for determining a decrease in a tread depth of a tyre (42, 43) on a second axle (46) of the motor vehicle after the time period by means of the reference tread depth at the beginning of the time period,

- means (49, 50) set up for determining the current reference tread depth on the basis of the decrease and a tyre wear ratio of tyres of the first axle and the second axle.

**14.** Device according to Claim 13, with

- means (47) for measuring a reference rotational frequency of the reference tyre,

- means (47) for measuring a rotational frequency of the tyre on the second axle,

- means (50) for forming a quotient from the reference rotational frequency and the rotational frequency,

- means (50) for multiplying the quotient by the reference tread depth to determine the tread depth of the tyre.

**15.** Device according to Claim 13 or 14, with an antilock braking system with means for determining a correction for the control of the antilock braking system, the correction being obtained from the quotient of the rotational frequency of the tyre on the second axle and the reference rotational frequency.

**16.** Device according to Claim 14 or 15, in which the means for determining the tread depth of the tyre is formed for determining the tread depth at the beginning and the end of the time period to determine the decrease, the given reference tread depth preferably being used for the multiplication of the quotient.

17. Device according to one of the preceding Claims 13 to 16, with a memory for the storage of the tread depths determined for a previous point in time.

18. Device according to Claim 17, with a program module (50) for calculating the tread depths at a current point in time, which accesses the memory for the calculation of the tread depths.

19. Device according to one of the preceding Claims 13 to 18, with means (55) for indicating the reference tread depth and/or the tread depths of one or more further tyres of the motor vehicle for a driver of the motor vehicle.

20. Device according to one of the preceding Claims 13 to 19, with means (53) for comparison of a determined tread depth with a minimum tread depth, the means for comparison being designed to emit a visual, acoustic and/or tactile warning signal if a determined tread depth goes below the minimum tread depth.

21. Device according to one of the preceding Claims 13 to 20, with

   - means (51) for determining the decrease in a tread depth of a tyre between a first point in time (m) and a second point in time (n),

   - means (51) for determining a distance covered between the first point in time and the second point in time,

   - means (51, 52) for determining a distance still to be travelled by extrapolation of the decrease in the tread depth to a minimum tread depth.

22. Device according to one of the preceding Claims 13 to 21, with

   - means (54) for determining data regarding an environmental condition, preferably regarding the presence of wetness on the road, rain, tyre slip and/or for measuring the outside temperature,

   - means (53) for evaluating the data regarding the environmental condition and a determined tread depth with regard to the assessment of a driving situation, preferably regarding aquaplaning and/or traction on snow.

**Revendications**

1. Procédé pour déterminer une profondeur de profil de référence actuelle d'un pneu de référence au niveau d'un premier essieu d'un véhicule automobile sur la base d'une profondeur de profil de référence donnée au début d'une période de temps, comprenant les étapes suivantes :

   - détection d'une réduction d'une profondeur de profil d'un pneu au niveau d'un deuxième essieu du véhicule automobile après une période de temps au moyen de la profondeur de profil de référence donnée au début de la période de temps,

   - détection de la profondeur de profil de référence actuelle à partir de la réduction et à partir d'un rapport d'usure des pneus entre les pneus du premier essieu et du deuxième essieu.

2. Procédé selon la revendication 1, comprenant les étapes supplémentaires suivantes :

   - mesure d'une fréquence de rotation de référence du pneu de référence,

   - mesure d'une fréquence de rotation du pneu au niveau du deuxième essieu,

   - formation d'un quotient à partir de la fréquence de rotation de référence et de la fréquence de rotation,

   - multiplication du quotient avec la profondeur de profil de référence pour déterminer la profondeur du profil du pneu.

3. Procédé selon la revendication 2, dans lequel la détection de la profondeur de profil du pneu est effectuée au début et à la fin de la période de temps pour la détection de la réduction, la profondeur de profil de référence donnée étant utilisée de préférence pour la multiplication du quotient.

4. Procédé selon l'une quelconque des revendications précédentes 1, 2 ou 3, dans lequel la profondeur de profil de référence actuelle détectée est utilisée comme profondeur de profil de référence donnée pour une détection subséquente d'une autre profondeur de profil de référence actuelle.

5. procédé selon l'une quelconque des revendications précédentes 1 à 4, dans lequel la profondeur de profil de référence actuelle est obtenue par soustraction du produit de la réduction et du rapport d'usure des pneus de la profondeur de profil de référence donnée.

**6.** Procédé selon l'une quelconque des revendications précédentes 1 à 5, dans lequel,

- à un instant n-1, la profondeur de profil de référence donnée est utilisée pour le calcul des profondeurs de profil d'un ou de plusieurs pneus du véhicule automobile et la profondeur de profil de référence actuelle est calculée à partir de la profondeur de profil de référence donnée en tenant compte de la réduction de la profondeur de profil d'un pneu au niveau du deuxième essieu et à partir du rapport d'usure des pneus, et

- à un instant n, la profondeur de profil de référence actuelle de l'instant n-1 est utilisée comme profondeur de profil de référence donnée pour le calcul des profondeurs de profil d'un ou de plusieurs pneus du véhicule automobile.

**7.** Procédé selon l'une quelconque des revendications précédentes 1 à 6, dans lequel la profondeur de profil de référence et/ou les profondeurs de profil d'un ou de plusieurs pneus supplémentaires du véhicule automobile sont indiquées à un conducteur du véhicule automobile.

**8.** Procédé selon l'une quelconque des revendications précédentes 1 à 7, dans lequel une comparaison avec une profondeur de profil minimale est effectuée et un signal d'avertissement visuel, acoustique et/ou tactile est émis lorsqu'une profondeur de profil détectée devient inférieure à la profondeur de profil minimale.

**9.** Procédé selon l'une quelconque des revendications précédentes 1 à 8, comprenant les étapes supplémentaires suivantes :

- détection de la réduction d'une profondeur de profil d'un pneu entre un premier instant (m) et un deuxième instant (n),

- détection d'une distance parcourue entre le premier et le deuxième instant,

- détection d'une distance restant à parcourir par extrapolation à partir de la réduction de la profondeur de profil jusqu'à une profondeur de profil minimale,

- de préférence, indication visuelle de la distance restant à parcourir.

**10.** Procédé selon l'une quelconque des revendications précédentes 1 à 9, comprenant les étapes supplémentaires suivantes :

- détection de données relatives à une condition environnante, de préférence relatives à la présence d'une chaussée humide, de pluie, de glissement des pneus et/ou à la température extérieure,

- analyse des données relatives à la condition environnante sur la base d'une profondeur de profil détectée relativement à l'analyse de la situation de conduite, de préférence relativement à un aquaplaning et/ou à une conduite sur neige.

**11.** Procédé selon l'une quelconque des revendications précédentes 1 à 10, dans lequel on utilise comme rapport d'usure des pneus un paramètre dépendant du type de véhicule automobile.

**12.** Procédé selon la revendication 11, dans lequel le paramètre est détecté statistiquement par la détection de rapports d'usure de pneus d'une quantité statique de véhicules automobiles du même type, par exemple sous forme de maximum ou de centre de gravité d'un histogramme correspondant.

**13.** Dispositif prévu pour détecter une profondeur de profil de référence actuelle d'un pneu de référence (41) au niveau d'un premier essieu (45) d'un véhicule automobile (40) sur la base d'une profondeur de profil de référence ($r_{ref}$) stockée dans une mémoire au début de la période de temps, comprenant :

- des moyens (49, 50) prévus pour détecter une réduction d'une profondeur de profil d'un pneu (42, 43) au niveau d'un deuxième essieu (46) du véhicule automobile après la période de temps au moyen de la profondeur de profil de référence au début de la période de temps,

- des moyens (49, 50) prévus pour détecter la profondeur de profil de référence actuelle sur la base de la réduction et d'un rapport d'usure des pneus du premier et du deuxième essieu.

**14.** Dispositif selon la revendication 13, comprenant

- des moyens (47) pour mesurer une fréquence de rotation de référence du pneu de référence,

- des moyens (47) pour mesurer une fréquence de rotation du pneu au niveau du deuxième essieu,

- des moyens (50) pour former un quotient à partir de la fréquence de rotation de référence et de la fréquence de rotation,

- des moyens (50) pour multiplier le quotient par la profondeur de profil de référence pour déterminer la profondeur de profil de pneu.

15. Dispositif selon la revendication 13 ou 14, comprenant un système d'antiblocage avec des moyens pour déterminer une correction pour la régulation du système d'antiblocage, la correction étant obtenue à partir du quotient de la fréquence de rotation du pneu au niveau du deuxième essieu et de la fréquence de rotation de référence.

16. Dispositif selon la revendication 14 ou 15, dans lequel les moyens pour détecter la profondeur de profil du pneu sont réalisés pour détecter la profondeur de profil au début et à la fin de la période de temps pour la détection de la réduction, la profondeur de profil de référence donnée étant utilisée de préférence pour la multiplication du quotient.

17. Dispositif selon l'une quelconque des revendications précédentes 13 à 16, comprenant une mémoire pour la mémorisation des profondeurs de profil déterminées pour un instant précédent.

18. Dispositif selon la revendication 17, comprenant un module de programme (50) pour le calcul des profondeurs de profil à un instant actuel, lequel intervient sur la mémoire pour le calcul des profondeurs de profil.

19. Dispositif selon l'une quelconque des revendications précédentes 13 à 18, comprenant des moyens (55) pour indiquer la profondeur de profil de référence et/ou les profondeurs de profil d'un ou de plusieurs autres pneus du véhicule automobile pour un conducteur du véhicule automobile.

20. Dispositif selon l'une quelconque des revendications précédentes 13 à 19, comprenant des moyens (53) pour comparer une profondeur de profil détectée à une profondeur de profil minimale, les moyens pour la comparaison étant réalisés pour fournir un signal d'avertissement visuel, acoustique et/ou tactile lorsqu'une profondeur de profil détectée devient inférieure à la profondeur de profil minimale.

21. Dispositif selon l'une quelconque des revendications précédentes 13 à 20, comprenant :

- des moyens (51) pour détecter la réduction d'une profondeur de profil d'un pneu entre un premier instant (m) et un deuxième instant (n),

- des moyens (51) pour détecter une distance parcourue entre le premier et le deuxième instant,

- des moyens (51, 52) pour détecter une distance restant à parcourir par extrapolation à partir de la réduction de la profondeur de profil jusqu'à une profondeur de profil minimale.

22. Dispositif selon l'une quelconque des revendications précédentes 13 à 21, comprenant :

- des moyens (54) pour détecter des données relatives à une condition environnante, de préférence relatives à la présence d'une chaussée humide, de pluie, de glissement des pneus et/ou pour mesurer la température extérieure,

- des moyens (53) pour analyser les données relatives à la condition environnante et à une profondeur de profil détectée relativement à l'analyse d'une situation de conduite, de préférence relativement à un aquaplaning et/ou à une conduite sur neige.

```
┌──────────────────────────────────────────────────────┐
│        Definition Referenzreifen an einer Achse        │╱ 10
└──────────────────────────────────────────────────────┘
                           │
                           ▼
┌──────────────────────────────────────────────────────┐
│ Eingabe Profiltiefen, Eingabe Reifenabriebsverhältnis der Achsen │╱ 12
└──────────────────────────────────────────────────────┘
                           │
                           ▼
┌──────────────────────────────────────────────────────┐
│ Messung der Abnahme der Profiltiefen nach einer Zeitdauer der anderen Achse basierend auf │╱ 14
│                    Referenzprofiltiefe                 │
└──────────────────────────────────────────────────────┘
                           │
                           ▼
┌──────────────────────────────────────────────────────┐
│ Berechnung der Referenzprofiltiefe aus der Abnahme multipliziert mit dem │╱ 16
│               Reifenabriebsverhältnis                  │
└──────────────────────────────────────────────────────┘
```

Fig. 1

```
┌──────────────────────────────────────────────────────┐
│                     Zeitpunkt n                        │
│     Eingabe Profiltiefe des Reifens; Kilometerstand    │╱ 30
└──────────────────────────────────────────────────────┘
                           │
                           ▼
┌──────────────────────────────────────────────────────┐
│                     Zeitpunkt m                        │
│     Eingabe Profiltiefe des Reifens; Kilometerstand    │╱ 32
└──────────────────────────────────────────────────────┘
                           │
                           ▼
┌──────────────────────────────────────────────────────┐
│ Extrapolation: Nach wievielen Kilometern erreicht Profiltiefe eine minimale │╱ 34
│                     Profiltiefe                        │
└──────────────────────────────────────────────────────┘
                           │
                           ▼
┌──────────────────────────────────────────────────────┐
│      Anzeige der noch zu fahrenden Kilometer           │╱ 36
└──────────────────────────────────────────────────────┘
```

Fig. 3

Zeitpunkt t = 1
Eingabe der Referenz-Profiltiefe $r_{ref}$ (t=1) und der Profiltiefen $r_x$(t=1), $r_y$(t=1), $r_z$(t=1)

Eingabe/Ermittlung
Reifenabriebsverhältnis V der Achsen

~20

Zeitpunkt t = 2
- Bestimmung der Profiltiefen:

$$r_x \ (t=2) = f_{ref}/f_x * (r_{ref} \ (t=1)+R)-R$$
$$r_y \ (t=2) = f_{ref}/f_y * (r_{ref} \ (t=1)+R)-R$$
$$r_z \ (t=2) = f_{ref}/f_z * (r_{ref} \ (t=1)+R)-R$$

- Bestimmung der aktuellen Referenz-Profiltiefe

$$r_{ref} \ (t=2) = r_{ref}(t=1) - F \ (t=2) * V$$

wobei F (t=2) = ( $r_x$(t=1) - $r_x$(t=2) )
mit R = Radius des abgefahrenen Reifens, d.h. für Profiltiefe = 0  mm

~22

Zeitpunkt t = n
- Bestimmung der Profiltiefen:

$$r_x \ (t=n) = f_{ref}/f_x * (r_{ref} \ (t= n-1)+R)-R$$
$$r_y \ (t=n) = f_{ref}/f_y * (r_{ref} \ (t= n-1)+R)-R$$
$$r_z \ (t=n) = f_{ref}/f_z * (r_{ref} \ (t= n-1)+R)-R$$

- Bestimmung der aktuellen Referenz-Profiltiefe

$$r_{ref} \ (t=n) = r_{ref}(t= n-1) - F \ (t=n) * V$$

wobei F (t=n) = ( $r_x$(t=n-1) - $r_x$(t=n) )

~24

Fig. 2

Fig. 4

Fig 5

EP 1 314 958 B1

59

| | |
|---|---|
| 0.20 | |
| 0.25 | 0 |
| 0.30 | 0 |
| 0.35 | 0 |
| 0.40 | 10 |
| 0.45 | 2 |
| 0.50 | 4 |
| 0.55 | 4 |
| 0.60 | 2 |
| 0.65 | 1 |
| 0.70 | 0 |
| 0.75 | 0 |
| 0.80 | 0 |
| 0.85 | 0 |
| 0.90 | 0 |
| 0.95 | 0 |
| 1.00 | 0 |
| 1.05 | 0 |
| 1.10 | 0 |
| 1.15 | 0 |

Fig. 6

Fig. 7